# EUROPEAN PATENT APPLICATION

(11) **EP 3 926 211 A1**
(43) Date of publication of application: **22.12.2021**
(21) Application number: 19910577.6
(22) Date of filing: 06.08.2019
(51) Int. Cl.: F16H 41/04, F16D 33/08

(54) **HYDRODYNAMIC AUTOMATIC TRANSMISSION**

(30) Priority: 17.01.2019 RU 2019101257
(71) Applicant: Omarov, Mikhail Magomedovich, Respublika Dagestan, Tarumovskij rajon, 368875 (RU)
(72) Inventor: Omarov, Mikhail Magomedovich, Respublika Dagestan, Tarumovskij rajon, 368875 (RU)
(74) Representative: Appleyard Lees IP LLP
(86) International application number: PCT/RU2019/000554
(87) International publication number: WO 2020/149764

(57) **Abstract**

The invention relates to hydrodynamic transmission. The hydrodynamic gear-box contains two pump wheels, which are round flat disks, on the front peripheral part of which installed firmly are radially directed blades. The first wheel is rigidly connected to the input shaft. The second and subsequent pump wheels, each with a diameter greater than the previous one, are mounted with their own hubs onto the hubs of the preceding pump wheels with the possibility of free rotation on them. On the back side of each disk, a device is installed to block it with the next pump wheel, and the last pump wheel - with the turbine wheel. The turbine wheel is mounted on the input shaft and in the crankcase of the drive device on bearings and is connected to vehicle's reverse mechanism and running gear;
achieved is the reduction in weight and size, increase of maintainability, service life and improvement of performance properties of vehicle's automatic transmission gear-box.

## Description

The invention relates to the field of transport engineering and concerns the design of elements of a step gear-box used in automatic transmissions of vehicles.

Nowadays there are automatic and hydro-mechanical gear-boxes in which transmission is carried out by means of gears (RU 2341384, RU 2585093, RU 2659163, RU 2 481511). The disadvantages of gear-boxes mentioned above are their heavy weight and size, complexity of design, which contains a large number of gears and switching mechanisms, complexity of maintenance and repair. In addition, inclusion of a hydrodynamic torque converter in the design of existent automatic transmissions leads to an additional increase in the weight and size characteristics of vehicle drive.

Also known is hydrodynamic torque converter for transmission RU 2294469, which consists of a housing, connected with a pump wheel and drive shaft of driving unit; turbine wheel is connected with the drive shaft of gear-box; reactor is mounted between the pump wheel and turbine wheel; torsional vibration damper; friction-driven clutch that connects the housing and the turbine wheel; freewheel connecting the reactor with the pump shaft that is rigidly connected to gear-box housing, distinctive in that the drum of the friction-driven clutch is welded to the inner surface of the housing; the drum is of stepped form, while on the inner surface of the larger diameter of the drum facing the turbine made are slots for installation of friction discs, and onto the inner surface of the smaller diameter of the drum facing the housing formed is a flat surface to support the piston; on the axis of rotation of the housing made outwards is a circular recess, outside of which made is a technological girdle for centering the hydrodynamic torque converter when installing it; pressed into the inner part of the circular recess is an anchor sleeve for the gear-box drive shaft, which has an internal axial hole, inserted into which is a slide bearing; made in the sidewalls of the anchor sleeve of the drive shaft are channels to feed oil into the cavity formed between the housing and the piston of the friction-driven clutch; the anchor sleeve is made step-like, on the outer surface of which slots are made to connect with the piston of the friction-driven clutch and the groove installed in which is an o-ring; at the same time the turbine wheel is connected by fastening elements with a drive sleeve for transmission input shaft and a disk, in which at least one torsional vibration damper is installed and on the outer surface of which made are slots for installation of friction discs of the friction-driven clutch; the drive sleeve has an axial through hole with slots; the drive sleeve is separated by thrust bearings from the anchor sleeve - on the one side, and from the freewheel sleeve - on the other side, and along the outer diameter of the housing welded are at least three elements for mounting to the drive unit.

The disadvantage of hydrodynamic converter is the complexity of its design, presence of a large number of parts with limited service life. In addition, to change the output shaft torque, it is necessary to use also manual or automatic transmission gear-box connected to such converter.

The object of the invention and achievable technical result is the simplification of design of vehicle's automatic transmission gear-box by eliminating its mechanical part with a large number of gears and complex gear-transmission mechanisms and by simplifying the design of blocking device of hydrodynamic torque converter, which allows to reduce weight and size, increase maintainability, service life and improve performance properties of vehicle's automatic transmission gear-box.

The obtained technical result is achieved due to the fact that proposed is a hydrodynamic transmission gear-box comprising of at least two pump wheels, which are round flat discs, on the front peripheral part of which firmly mounted are radially directed blades, moreover the first wheel is rigidly connected with the input shaft, the second and subsequent pump wheels, the diameter of each of which is larger than the diameter of the preceding one, have their hubs mounted onto the hubs of the preceding pump wheels with the possibility of free rotation on them, but without the possibility of mutual axial movement, so that installed on the back side of each disk is a device to block it with the next pump wheel, and the last pump wheel - with turbine wheel; mounted on the front side of the second and subsequent pump wheels and on the turbine wheel are cylindrical rings with internal cogs for coupling with the locking devices mounted on the back side of pump wheels; the blades of the turbine wheel from the side facing the blades of the pump wheels are covered by a cone-shaped ring disc, the larger diameter of which is equal to the diameter of the disc of the last pump wheel, while the smaller diameter equals the smaller diameter of the blades of the first pump wheel, moreover the turbine wheel is mounted on the input shaft and in the housing of the drive unit on bearings and is connected with the vehicle's reverse mechanism and running gear. The device for locking pump wheels includes a cogged segment with guides, stock with a groove, arms and a stopper, a sleeve with a cup and arms located on the stock, while in the cup there is a spring backed by the stock arms, eccentrics connected on one side to the pump wheel, and on the other side - to the arms of the sleeve with the cup, servomechanism including springs connected to the pump wheel on one side and to the stock arms - on the other side, a thrust washer fixed to the pump wheel and a spring that bears against the stock limiter, while the guides of the cogged segment are so made as to allow the radial movement of the cogged segment along the axis of the stock, while excluding the movement of the cogged segment in the tangential direction.

The essence of the proposed invention is explained by drawings:

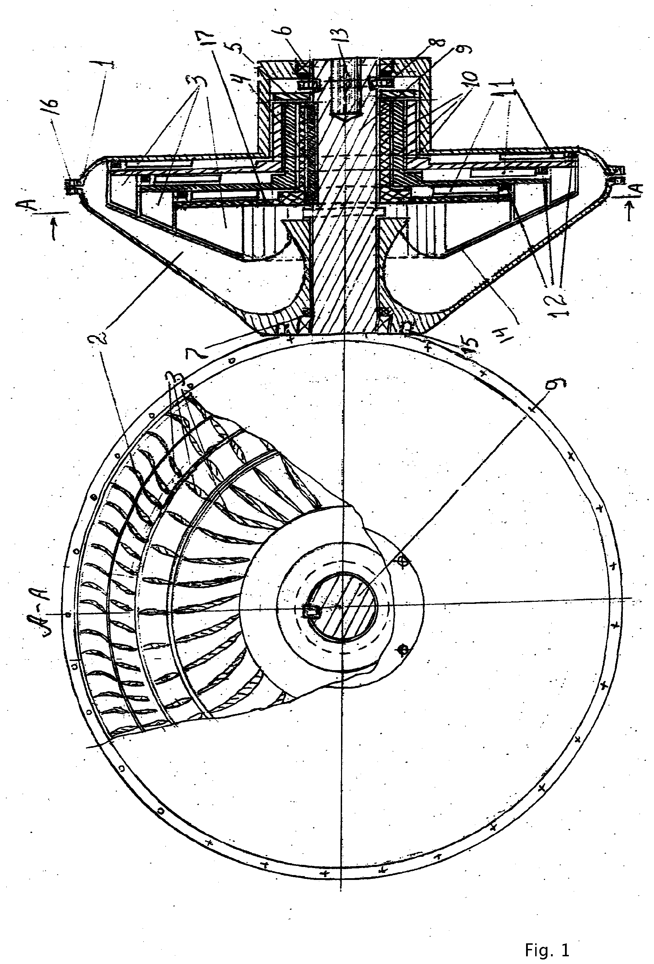

Fig. 1 - General view of hydrodynamic automatic transmission gear-box, where
   1 - turbine wheel (housing);
   2 - turbine wheel blades;
   3 - blades of pump wheel;
   4 - key;
   5 - washer;
   6 - bearing;
   7 - oil seal;
   8 - locking ring;
   9 - input shaft;
   10 - pump wheel hub;
   11 - pump wheel blocking (unblocking) device;
   12 - cylindrical rings with internal cogs;
   13 - internal slots of drive shaft;
   14 - cone-shaped ring disk;
   15 - holes for mounting output shaft;
   16 - lugs for connecting halves of housing;
   17 - first pump wheel.
Fig. 2 - Device for blocking (unblocking) pump wheels - blocking mechanism in unblocked position,
Fig. 3 - Device for blocking (unblocking) pump wheels - blocking mechanism in blocked position, where
   21 - pump wheel (internal);
   22 - pump wheel (external);
   23 - cogged segment with guides;
   24 - stock;
   25, 26, 29 - springs;
   27 - stock arms;
   28 - servomechanism;
   30 - cup;
   31 - sleeve with arms;
   32 - eccentrics;
   33 - pin;
   34 - groove;
   35 - segment cogs of internal pump wheel;
   36 - cogs of the ring edge of external pump wheel;
   37 - guide sleeve;
   38 - thrust washer;
   39 - stock limiter;
   a-a - axis passing through the points of hinge attachment of the ends of servomechanism springs on the stock arms;
   b-b -axis passing through the points of hinge attachment of servomechanism springs on the internal pump wheel.

The hydrodynamic automatic transmission works as follows (see Fig.1).

When the input shaft 9 rotates, the first pump wheel 17, rigidly connected to the input shaft, creates a flow of working fluid, which fills the internal cavity of the gear-box. The velocity of the working fluid flow has radial and tangential components. On the hub of the first pump wheel (internal), a second (external) pump wheel is mounted with the possibility of free rotation on it. The flow of working fluid falling on the blades of the external pump wheel sets it in motion. Similarly driven are subsequent pump wheels (there can be any number of them), who also rotate freely on the hubs of the preceding pump wheels. In this case, cone-shaped ring disk 14 directs the working fluid flow accelerated by the pump wheels to the peripheral part of turbine wheel 1. The flow of the working fluid, reaching the blades of turbine wheel 2, which is rigidly connected to the housing and the output shaft through the holes 15, transmits to them the torque from the input shaft. To seal the gear-box and to prevent leakage of the working fluid, use oil and tightening seals (not all are shown here).

At the start of low-speed rotation of the input shaft (vehicle's neutral gear), no torque is transmitted to the turbine wheel because the value of the flow rate and internal sliding of the working fluid is insignificant. When the number of revolutions of the input shaft increases and the flow rate of the working fluid increases in the radial and tangential directions, the turbine wheel receives torque first only from the first pump wheel (vehicle's first gear). In this case, the second and subsequent pump wheels, rotating freely on the hubs of preceding pump wheels, do not create resistance to the transference of the working fluid flow in the radial and tangential directions.

With further increase in the number of revolutions of input shaft 9 and first pump wheel 17 rigidly connected to it, when a certain number of revolutions is reached, with the help of pump wheel blocking device 11 the first pump wheel is blocked with the second pump wheel (second gear of movement), then jointly rotating first and second pump wheels - with the subsequent one (third gear) and so on. And upon reaching a certain number of revolutions of the jointly rotating pump wheels, the last pump wheel is blocked with turbine wheel (housing) 1.

When the vehicle's speed decreases due to changes in external conditions, when therefore, the number of revolutions of the turbine wheel and all the pump wheels blocked with it decreases to a certain value, the housing is unblocked from the last pump wheel. With a further decrease in the speed of rotation of the turbine wheel caused by further decrease in the vehicle's speed, decreased is the speed of rotation of the rest of the pump wheels, who are unblocked from the turbine wheel, but remain blocked together and when their rotation speed decreases to a certain value, occurs a sequential unblocking of the next pump wheel from the other blocked wheels. Thus, when a certain number of revolutions is reached, reverse gear shift occurs.

The number of revolutions at which the pump wheels lock and unlock is set for the locking mechanism of each pump wheel, and moreover, because of the peculiarities of blocking mechanism, the number of revolutions needed for its blocking will be more than number of revolutions needed for unblocking for each mechanism.

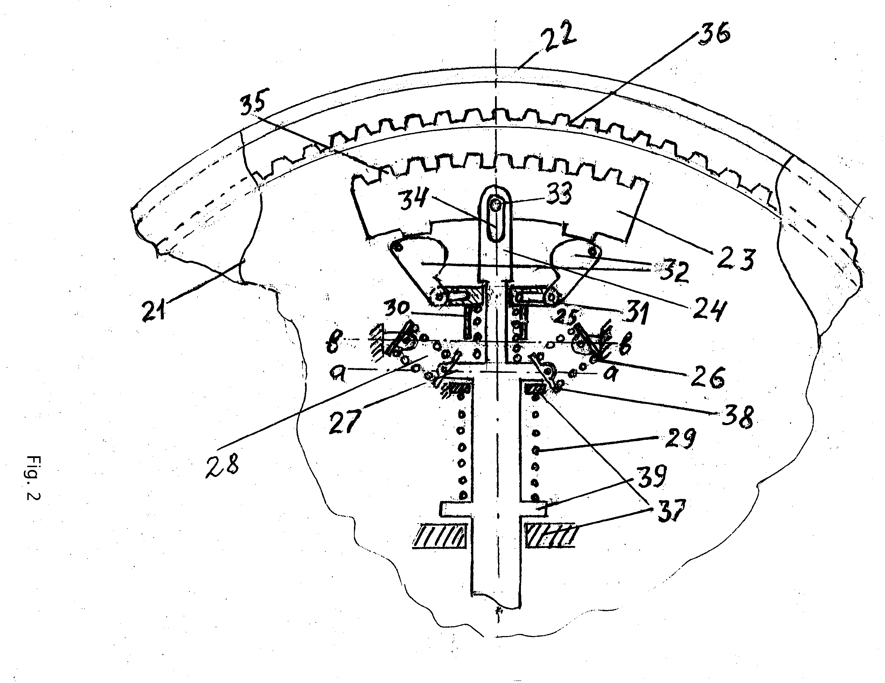

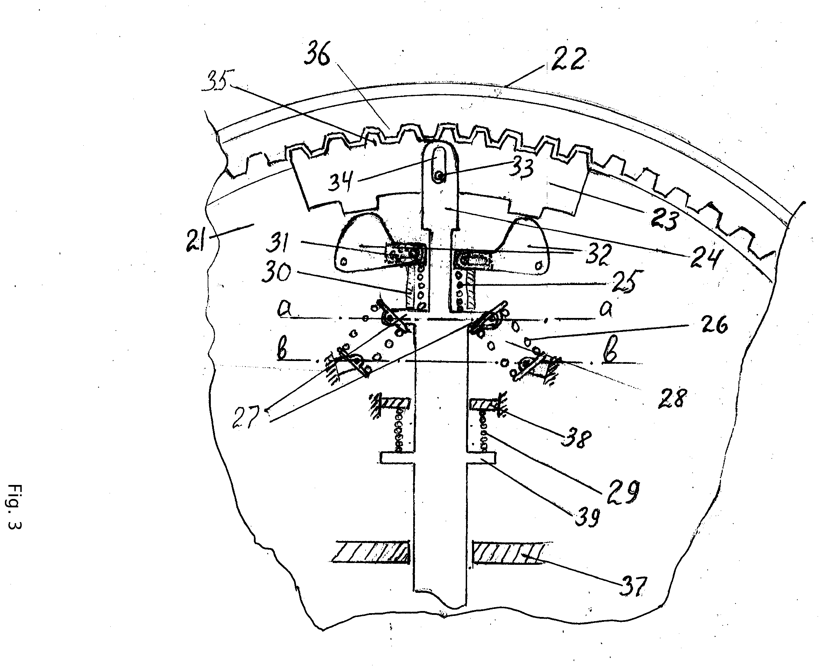

Blocking (unblocking) the wheels is carried out as follows (see Fig2, Fig.3)

When pump wheel 21 rotates, under the action of centrifugal force cogged segment 23 and stock 24 start moving radially from the center to the periphery (blocking), overcoming the counteraction of springs 25, 26 and 29. Moreover, with an increase in the number of revolutions and increase in the centrifugal force, the counteracting force from servomechanism 28 with springs 26 will decrease due to a change in the angle of application of forces, and when axes a-a and b-b coincide, it will become zero. The moment axis a-a passes axis b-b a sharp movement of the stock to the periphery will occur, since the force of springs 26 of servomechanism 28 will also be added to the centrifugal force, which will also be directed to the periphery. Rod arm 24 will abut cup 30 of the sleeve with arms 31, overcoming the resistance of weak spring 25, and the whole system will connect the cogged segment 23 of inner wheel 21 with the cogged ring edge of outer pump wheel 22. The sleeve with arms 31 will close the rear side of cogged segment 23 with the cams of eccentrics 32, and by that arms will ensure reliable engagement of the two disks. With that, pin 33 will end up at the lower (nearer to the center of the disk) edge of slot 34.

When the speed of joint rotation of blocked pump wheels 21 and 22 is reduced to a certain limit, stock 24 and gear segment 23 under the action of spring 25, overcoming the counteraction of servomechanism 28, begin to move radially from the periphery to the center of the pump wheels (unblocking). After axis a-a crosses the line of axis b-b resistance of servo-mechanism 28 stops, and under the action of springs 26 and 29 there will be a sharp movement of stock 24 to the center of the pump wheel, sleeve 31 with arms will unlock by eccentric 32 cogged segment 23, it will be released from engagement and pump wheels 21 and 22 will rotate separately.

Thus, the proposed design provides simultaneous performance of functions of the torque converter and automatic transmission gear-box, which allows to exclude complex gear transmission mechanisms from the design, the simple design of the locking device also includes a small number of interconnected parts, which leads to simplification of design, increased reliability, maintainability and reduction in weight and size of gear-box as a whole.

## Claims

1. Hydrodynamic transmission gear-box comprising of at least two pump wheels, which are round flat discs, on the front peripheral part of which firmly mounted are radially directed blades, while the first wheel is rigidly connected with the input shaft, the second and subsequent pump wheels, the diameter of each of which is larger than the diameter of the preceding one, have their hubs mounted onto the hubs of the preceding pump wheels with the possibility of free rotation on them, but without the possibility of mutual axial movement, and to ensure that a device is installed on the back of each disc to block it with the next pump wheel, and the last pump wheel - with turbine wheel; mounted on the front side of the second and subsequent pump wheels and the turbine wheel are cylindrical rings with internal cogs for coupling with the locking device; blades of the turbine wheel from the side facing the blades of the pump wheels are covered with a cone-shaped ring disc, the larger diameter of which is equal to the diameter of the disc of the last pump wheel, and the smaller diameter equals the smaller diameter of the blades of the first pump wheel, moreover, the turbine wheel is mounted on the input shaft and in the crankcase of the drive device on bearings and is connected to vehicle's reverse mechanism and running gear.
